(19) Europäisches Patentamt / European Patent Office / Office européen des brevets

(11) **EP 2 901 849 A1**

(12) # EUROPEAN PATENT APPLICATION
published in accordance with Art. 153(4) EPC

(43) Date of publication:
**05.08.2015 Bulletin 2015/32**

(21) Application number: **13842937.8**

(22) Date of filing: **20.09.2013**

(51) Int Cl.:
*A01G 1/00* (2006.01)     *B01J 39/08* (2006.01)
*B01J 41/08* (2006.01)     *C01B 39/02* (2006.01)
*C01F 7/00* (2006.01)

(86) International application number:
**PCT/JP2013/075565**

(87) International publication number:
**WO 2014/050765 (03.04.2014 Gazette 2014/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.09.2012 JP 2012213575
27.09.2012 JP 2012213576**

(71) Applicant: **Toyo Tire & Rubber Co., Ltd.
Osaka-shi, Osaka 550-8661 (JP)**

(72) Inventors:
• **ISHIZAKA, Nobuyoshi**
  **Osaka-shi**
  **Osaka 550-8661 (JP)**
• **TSUBOI, Masayuki**
  **Osaka-shi**
  **Osaka 550-8661 (JP)**
• **KAWAMURA, Shinya**
  **Osaka-shi**
  **Osaka 550-8661 (JP)**

(74) Representative: **Intès, Didier Gérard André et al
Cabinet Beau de Loménie
158, rue de l'Université
75340 Paris Cedex 07 (FR)**

(54) **ARTIFICIAL SOIL PARTICLES, ARTIFICIAL SOIL AGGREGATES, ARTIFICIAL SOIL MOLDED BODY, GREENING SHEET, WALL GREENING PANEL AND GARDENING BLOCKS USING ARTIFICIAL SOIL MOLDED BODY**

(57)     A high-quality and easy-to-handle artificial soil particle is provided which can exhibit well-balanced basic soil functions. In the artificial soil particle 10, a plurality of fillers 1 having a small hole 2 ranging from the subnanometer to the submicrometer scale are clustered together. A communication hole 3 ranging from the submicrometer to the submillimeter scale is formed between the fillers 1. The small holes 2 are distributed and arranged around the communication hole 3 so that the communication hole 3 is allowed to take in water W and nutrients K, N, and P from the outside and the small holes 2 are allowed to receive the nutrients K, N, and P from the communication hole 3. The fillers 1 are joined together into a three-dimensional network so that the total volume of the communication holes 3 is greater than the total volume of the small holes 2.

[FIG. 2]

**Description**

TECHNICAL FIELD

The present invention relates to an artificial soil particle which is a collection of a plurality of fillers, and an artificial soil aggregate which is an aggregate of the artificial soil particles. The present invention also relates to an artificial soil molded product provided by molding the artificial soil particles, and a greening sheet, wall greening panel, and horticultural block using the artificial soil molded product.

BACKGROUND ART

There have in recent years been an increasing number of plant factories, which allow for growing of plants, such as vegetables, etc., in an environment under controlled growth conditions. In most conventional plant factories, leaf vegetables, such as lettuce, etc., are hydroponically grown. More recently, there has been a move toward attempts to grow root vegetables, which are not suitable for hydroponic cultivation, in a plant factory. In order to grow root vegetables in a plant factory, it is necessary to develop an artificial soil which has good basic soil functions and high quality, and is easy to handle.

Artificial soil is also utilized to grow plants on the roofs and balconies of buildings, houses, etc., in order to green urban areas. In urban areas, greening significantly contributes to cleaning of the atmosphere, relaxation of the heat island phenomenon, etc., and is useful for causing a living environment to be comfortable. For greening building roofs, etc., it is important that soil as a growing medium has light weight and water retentivity, and good workability for attaching the soil to a floor or wall of a building. Therefore, vegetation mats, etc., have been developed which employ an artificial soil which has light weight and good water retentivity and workability instead of natural soil, which has heavy weight and poor workability.

Among the artificial soils which have so far been developed is an aggregate-structure zeolite which is an aggregate of zeolite powder particles bonded together using a binder including a water-soluble polymer (see, for example, Patent Document 1). In the aggregate-structure zeolite of Patent Document 1, zeolite particles are aggregated to improve water retentivity so that the porous structure and cation exchange capability of zeolite, which has poor water retentivity, are utilized in an artificial soil.

Also, a porous product including an organic polymeric material as a base, that has an open-cell foam structure, has been developed (see, for example, Patent Document 2). The open-cell foam porous product of Patent Document 2 is manufactured by thermal fusion bonding of a mixture of a thermoplastic resin powder, binder component, and surfactant. Patent Document 2 states that the open-cell foam porous product has a low-density and open-cell foam structure, and therefore, is likely to have a good ability to absorb liquid. Patent Document 2 also states that the open-cell foam porous product can be used as a medium for growing plants.

On the other hand, among the vegetation mats for greening is, for example, one in which growing soil is rubbed on a base mat which is a deposit of fibers in the form of nonwoven fabric so that voids between the fibers are filled with the growing soil, i.e., the growing soil and the base mat are integrated together (see, for example, Patent Document 3). This vegetation mat has a density gradient, where the lowermost layer is dense and the uppermost layer is sparse, and the lowermost layer serves as a water retention layer. In the vegetation mat of Patent Document 3, voids between fibers in the uppermost layer of the base mat are filled with a growing soil having a small particle size while voids between fibers in the lowermost layer are filled with a growing soil having a large particle size, whereby the water retentivity of the vegetation mat is improved and the outflow of the soil by wind and rain is reduced or prevented.

CITATION LIST

PATENT LITERATURE

Patent Document 1: Japanese Unexamined Patent Application Publication No. 2000-336356 (see, particularly, claim 1)
Patent Document 2: Japanese Unexamined Patent Application Publication No. 2011-241262 (see, particularly, paragraphs [0050] to [0052])
Patent Document 3: Japanese Unexamined Patent Application Publication No. 2000-144749 (see, particularly, paragraph [0015])

SUMMARY OF INVENTION

TECHNICAL PROBLEM

When an artificial soil is developed, it is, for example, desirable to impart, to the artificial soil, the control function capable of supplying suitable water or nutrients to a plant to be grown while achieving the ability to grow plants which is similar to that of natural soil. In other words, artificial soils are required to have well-balanced basic soil functions.

In this regard, in the aggregate-structure zeolite of Patent Document 1, which is manufactured by only drying a mixture of zeolite powder and a binder in the presence of water, the microscopic structure of zeolite does not effectively work in the aggregate, and therefore, the performance of zeolite is not necessarily sufficiently exhibited. Also, zeolite is likely to form lumps during production of the aggregate, leading to poor water retentivity. Water retentivity, which is one of the basic functions of soil, influences fertilizer retentivity. Therefore, if the water retentivity of the aggregate is not sufficient, it is difficult to effectively utilize the porous structure and cation exchange capability of zeolite, which is involved with fertilizer retentivity, in an artificial soil.

The open-cell foam porous product of Patent Document 2 is manufactured by pulverizing a foam material of thermoplastic resin to obtain a powder material and then subjecting the powder material to thermal fusion bonding. As a result, the open-cell foam porous product has water absorbability. However, the thermoplastic resin itself used in Patent Document 2 does not have fertilizer retentivity, and therefore, when the open-cell foam porous product formed of the thermoplastic resin is used as an artificial soil, the artificial soil does not exhibit well-balanced basic soil functions.

On the other hand, the vegetation mat of Patent Document 3 for greening has the lowermost layer in which voids between fibers are dense so that the water retentivity is improved. In addition, voids between fibers in the lowermost layer are filled with a growing soil having a large particle size so that the outflow of the growing soil by wind and rain is reduced or prevented. However, when the external environment is wet, an excessive amount of water is retained in the lowermost layer of the vegetation mat of Patent Document 3, resulting in a deterioration in drainage performance. In such a case, the vegetation mat is likely to inhibit the growth of a plant and also have adverse influence on the building. Moreover, the vegetation mat of Patent Document 3 maintains water retentivity between the dense fiber voids and the growing soil having a large particle size. In such a case, when the external environment is dry, water leaks out from between the fiber voids and the growing soil having a large particle size, and therefore, the vegetation mat fails to retain sufficient water for growing a plant. The vegetation mat of Patent Document 3 also uses an artificial soil including barks and palm peats as a growing soil for achieving fertilizer retentivity. This artificial soil does not have sufficiently light weight and poor workability.

With the above problems in mind, it is an object of the present invention to provide an artificial soil, i.e., an artificial soil particle and an artificial soil aggregate which is an aggregate of the artificial soil particles, that has high quality and is easy to handle, and can exhibit well-balanced basic soil functions. It is another object of the present invention to provide a lightweight and easy-to-handle artificial soil molded product which is obtained by molding the artificial soil particles, and a greening sheet, wall greening panel and horticultural block which employ the artificial soil molded product.

SOLUTION TO PROBLEM

To achieve the object, an artificial soil particle according to the present invention is one in which a plurality of fillers having a small hole ranging from the subnanometer to the submicrometer scale are clustered together. A communication hole ranging from the submicrometer to the submillimeter scale is formed between the fillers. The small holes are distributed and arranged around the communication hole so that the communication hole is allowed to take in water and nutrients from the outside and the small holes are allowed to receive the nutrients from the communication hole.

According to the artificial soil particle thus configured, the hole diameter of the small hole of the filler ranges from the subnanometer to the submicrometer scale, and therefore, nutrients needed for an improvement in the quality of a plant can be effectively taken into the small hole. Also, the hole diameter of the communication hole formed between the clustered fillers ranges from the submicrometer to the submillimeter scale, and therefore, water essential for the growth of a plant can be effectively absorbed into the communication hole. In addition, as to a positional relationship between the small holes and the communication hole, the small holes are distributed and arranged around the communication hole so that the communication hole is allowed to take in water and nutrients from the outside, and the small holes are allowed to receive the nutrients from the communication hole. Therefore, the small hole mainly provides fertilizer retentivity while the communication hole mainly provides water retentivity.

Thus, the artificial soil particle thus configured has the particular relationship between the small holes and the communication hole within a single particle, and the small hole and the communication hole have different functions. Therefore, a high-quality and functional artificial soil particle which can exhibit well-balanced basic soil functions (i.e., water retentivity and fertilizer retentivity which are well balanced), can be provided. In addition, such an artificial soil particle can suitably supply water and nutrients to a plant to be grown, and therefore, is easy to maintain and handle.

In the artificial soil particle of the present invention, the fillers are preferably joined together into a three-dimensional network so that the total volume of the communication holes is greater than the total volume of the small holes.

According to the artificial soil particle thus configured, the fillers are joined together into a three-dimensional network, and therefore, the artificial soil particle has stable structure. Also, in the state in which the fillers are joined together, the total volume of the communication holes is greater than the total volume of the small holes, so that the artificial soil particle has light weight, and therefore, is easy to handle.

In the artificial soil particle of the present invention, a water retention material is preferably introduced into at least a portion of the communication hole, and ion exchange capability is preferably imparted to the small hole.

According to the artificial soil particle thus configured, a water retention material is introduced into at least a portion of the communication hole, whereby the water retentivity of the communication hole is increased. Also, ion exchange capability is imparted to the small hole, whereby the fertilizer retentivity of the small hole is increased. As a result, an artificial soil particle which has durability for long-term use can be provided.

In the artificial soil particle of the present invention, the small hole preferably has a hole diameter of 0.2 to 800 nm, and the communication hole preferably has a hole diameter of 0.1 to 500 $\mu$m.

According to the artificial soil particle thus configured, the small hole has a hole diameter of 0.2 to 800 nm, and the communication hole has a hole diameter of 0.1 to 500 $\mu$m. Therefore, the small hole can take in various nutrients, and the communication hole can hold sufficient water. As a result, an artificial soil particle which has durability for long-term use can be provided.

In the artificial soil particle of the present invention, the artificial soil particle preferably has a particle size of 0.2 to 10 mm.

According to the artificial soil particle thus configured, the artificial soil particle has a particle size of 0.2 to 10 mm. Therefore, an easy-to-handle artificial soil which is particularly suitable for growing of root vegetables can be provided.

To achieve the object, an artificial soil aggregate according to the present invention is an aggregate of the above artificial soil particles.

According to the artificial soil aggregate thus configured, the artificial soil particles of the present invention are aggregated. Therefore, a high-quality and functional artificial soil aggregate which can exhibit well-balanced basic soil functions (i.e., water retentivity and fertilizer retentivity which are well balanced), can be provided. In addition, such an artificial soil aggregate can suitably supply water and nutrients to a plant to be grown, and therefore, is easy to maintain and handle.

To achieve the object, an artificial soil molded product according to the present invention is obtained by molding the above artificial soil particles.

According to the artificial soil molded product thus configured, the artificial soil particles of the present invention are molded. Therefore, the artificial soil molded product has good basic functions (good balance between water retentivity and fertilizer retentivity) as an artificial soil, and is easy to maintain. Also, the artificial soil molded product has light weight and good drainage performance, and therefore, is easy to handle.

To achieve the object, a greening sheet according to the present invention is obtained by laying the above artificial soil molded product in the form of a sheet.

According to the greening sheet thus configured, the artificial soil molded product of the present invention is laid in the form of a sheet. Therefore, the greening sheet has light weight and is easy to handle. Such a greening sheet can be easily installed on a floor and wall of a roof and balcony of a building. Also, the artificial soil molded product included in the greening sheet has water retentivity and fertilizer retentivity. Therefore, the greening sheet can suitably supply water and nutrients to a plant to be grown, and therefore, is easy to maintain.

To achieve the object, a wall greening panel according to the present invention includes the above artificial soil molded product and a framework which holds the artificial soil molded product.

According to the wall greening panel thus configured, the artificial soil molded product of the present invention is held by a framework. Therefore, the wall greening panel has light weight and is easy to handle. Such a wall greening panel can be easily installed on a floor and wall of a roof and balcony of a building. Also, the artificial soil molded product included in the wall greening panel has water retentivity and fertilizer retentivity. Therefore, the wall greening panel can suitably supply water and nutrients to a plant to be grown, and therefore, is easy to maintain.

To achieve the object, a horticultural block according to the present invention is the above artificial soil molded product in the form of a block.

According to the horticultural block thus configured, the artificial soil molded product of the present invention is provided in the form of a block. Therefore, the horticultural block has light weight and is easy to handle. Such a horticultural block can be easily installed on a floor and wall of a roof and balcony of a building. Also, the artificial soil molded product included in the horticultural block has water retentivity and fertilizer retentivity. Therefore, the horticultural block can suitably supply water and nutrients to a plant to be grown, and therefore, is easy to maintain.

BRIEF DESCRIPTION OF DRAWINGS

[FIG. 1] FIG. 1 is a diagram schematically showing an artificial soil particle according to the present invention.
[FIG. 2] FIG. 2 is a model diagram schematically showing a positional relationship between small holes and a communication hole in the artificial soil particle of the present invention.
[FIG. 3] FIG. 3 is a diagram for describing an artificial soil aggregate according to the present invention.
[FIG. 4] FIG. 4 is a diagram for describing an artificial soil molded product according to the present invention.
[FIG. 5] FIG. 5 is a diagram for describing a greening sheet according to the present invention.
[FIG. 6] FIG. 6 is a partially cross-sectional view showing a situation that plants are planted in the greening sheet of the present invention.
[FIG. 7] FIG. 7 is a diagram for describing a wall greening panel according to the present invention.
[FIG. 8] FIG. 8 is a diagram for describing a horticultural block according to the present invention.
[FIG. 9] FIG. 9 is a graph showing the result of a measurement of the hole diameter distribution of the artificial soil particle or artificial soil aggregate of the present invention by mercury intrusion.

DESCRIPTION OF EMBODIMENTS

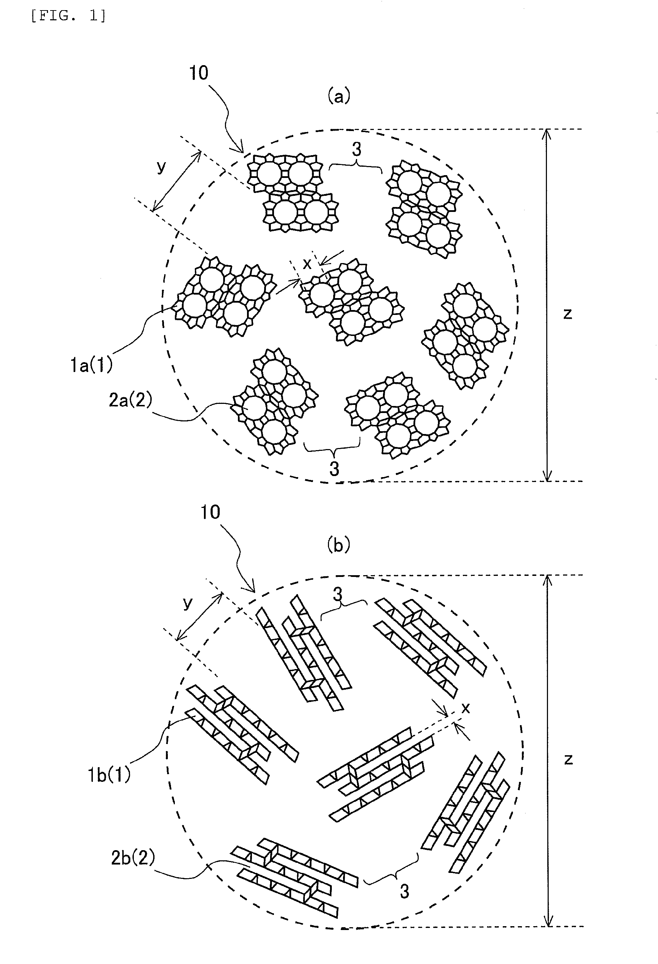

Embodiments of an artificial soil particle, artificial soil aggregate, artificial soil molded product, greening sheet, wall greening panel, and horticultural block according to the present invention will now be described with reference to FIGS. 1 to 9. Note that the present invention is not intended to be limited to configurations described and shown in the embodiments below and the drawings.

<Configuration of Artificial Soil Particle>

FIG. 1 is a diagram schematically showing an artificial soil particle 10 according to the present invention. FIG. 1(a) illustrates an artificial soil particle 10 which employs zeolite 1a, which is a natural porous mineral, as a filler 1. FIG. 1(b) illustrates an artificial soil particle 10 which employs hydrotalcite 1b, which is a natural layered mineral, as a filler 1. Note that symbols x, y and z shown in FIG. 1 represent sizes of a small hole 2 described below, a communication hole 3 described below, and the artificial soil particle 10, respectively. The sizes x, y and z are not to scale in the drawings.
The artificial soil particle 10 is a collection of a plurality of the fillers 1 in the form of a grain. In the artificial soil particle 10, the fillers 1 do not necessarily need to be in contact with each other. If the fillers 1 maintain a relative positional relationship within a predetermined range in a single particle with a binder, etc., being interposed between each filler, the fillers 1 are considered to be clustered together in the form of a grain. The filler 1 of the artificial soil particle 10 has a large number of the small holes 2 extending from the surface to the inside. The small hole 2 is in various forms. For example, when the filler 1 is the zeolite 1a of FIG. 1(a), a void 2a which exists in the crystal structure of the zeolite 1a is the small hole 2. When the filler 1 is the hydrotalcite 1b of FIG. 1(b), an interlayer space 2b which exists in the layered structure of the hydrotalcite 1b is the small hole 2. In other words, the term "small hole" as used herein means a void, interlayer space, space, etc., that exist in the structure of the filler 1 and are not limited to "hole-like" forms.
The size of the small hole 2 of the filler 1 (the average value of the size x of the void 2a or the interlayer space 2b in FIG. 1) ranges from the subnanometer to the submicrometer scale. For example, the size of the small hole 2 may be set to about 0.2 to 800 nm. When the filler 1 is the zeolite 1a of FIG. 1(a), the size (diameter) of the void 2a in the crystal structure of the zeolite 1a is about 0.3 to 1.3 nm. When the filler 1 is the hydrotalcite 1b of FIG. 1(b), the size (distance) of the interlayer space 2b in the layered structure of the hydrotalcite 1b is about 0.3 to 3.0 nm. Alternatively, the filler 1 may be formed of an organic porous material described below. In this case, the diameter x of the small hole 2 is about 0.1 to 0.8 $\mu$m. The size of the small hole 2 of the filler 1 is measured using an optimum technique which is selected from gas adsorption, mercury intrusion, small-angle X-ray scattering, image processing, etc., and a combination thereof, depending on the state of an object to be measured.
The small hole 2 of the filler 1 is preferably formed of a material having ion exchange capability so that the artificial soil particle 10 has sufficient fertilizer retentivity. In this case, the material having ion exchange capability may be a material having cation exchange capability, a material having anion exchange capability, or a mixture thereof. Alternatively, a porous material (e.g., a polymeric foam material, glass foam material, etc.) which does not have ion exchange capability may be separately prepared, the above material having ion exchange capability may be introduced into the small holes of the porous material by injection, impregnation, etc., and the resultant material may be used as the filler 1. Examples of the material having cation exchange capability include cation exchange minerals, humus, and cation exchange resins. Examples of the material having anion exchange capability include anion exchange minerals and anion exchange resins.

Examples of the cation exchange minerals include smectite minerals such as montmorillonite, bentonite, beidellite, hectorite, saponite, stevensite, etc., mica minerals, vermiculite, zeolite, etc. Examples of the cation exchange resins include weakly acidic cation exchange resins and strongly acidic cation exchange resins. Of them, zeolite, which is used in this embodiment, or bentonite, is preferable. The cation exchange minerals and the cation exchange resins may be used in combination. The cation exchange capacity of the cation exchange mineral and cation exchange resin is set to 10 to 700 meq/100 cc, preferably 20 to 700 meq/100 cc, and more preferably 30 to 700 meq/100 cc. When the cation exchange capacity is less than 10 meq/100 cc, sufficient nutrients cannot be taken in, and nutrients taken in are likely to flow out quickly due to watering, etc. On the other hand, even when the cation exchange capacity is greater than 700 meq/100 cc, the fertilizer retentivity is not significantly improved, which is not cost-effective.

Examples of the anion exchange minerals include natural layered double hydroxides having a double hydroxide as a main framework, such as hydrotalcite, manasseite, pyroaurite, sjogrenite, patina, etc., synthetic hydrotalcite and hydrotalcite-like substances, and clay minerals such as allophane, imogolite, kaolinite, etc. Examples of the anion exchange resins include weakly basic anion exchange resins and strongly basic anion exchange resins. Of them, hydrotalcite is preferable, which is used in this embodiment. The anion exchange minerals and the anion exchange resins may be used in combination. The anion exchange capacity of the anion exchange mineral and anion exchange resin is set to 5 to 500 meq/100 cc, preferably 20 to 500 meq/100 cc, and more preferably 30 to 500 meq/100 cc. When the anion exchange capacity is less than 5 meq/100 cc, sufficient nutrients cannot be taken in, and nutrients taken in are likely to flow out quickly due to watering, etc. On the other hand, even when the anion exchange capacity is greater than 500 meq/100 cc, the fertilizer retentivity is not significantly improved, which is not cost-effective.

<Techniques of Granulating Fillers>

When the filler 1 is formed of a natural inorganic mineral, such as the zeolite 1a or the hydrotalcite 1b illustrated in this embodiment, a plurality of the fillers 1 may be clustered together in the form of a grain (the artificial soil particle 10) using a binder. The artificial soil particle 10 may be formed using a binder as follows: a binder, solvent, etc., are added to the filler 1, followed by mixture, and the mixture is introduced into a granulation machine, followed by a known granulation technique, such as tumbling granulation, fluidized bed granulation, agitation granulation, compression granulation, extrusion granulation, pulverization granulation, melting granulation, spraying granulation, etc. The grains thus obtained are optionally dried and classified. Thus, the production of the artificial soil particle 10 is completed. Alternatively, a binder and optionally a solvent, etc., may be added to the filler 1, followed by kneading, the mixture may be dried into a block, and the block may be pulverized using a suitable pulverization means, such as a mortar and a pestle, hammer mill, roll crusher, etc. Although the grains thus obtained may be directly used as the artificial soil particles 10, the grains may preferably be sieved to obtain ones having a desired particle size.

The binder may be either an organic binder or an inorganic binder. Examples of the organic binder include synthetic resin binders such as a polyolefin binder, polyvinyl alcohol binder, polyurethane binder, polyvinyl acetate binder, etc., and naturally-occurring binders such as polysaccharides (e.g., starch, carrageenan, xanthan gum, gellan gum, alginic acid, etc.), animal proteins (e.g., an animal glue, etc.), etc. Examples of the inorganic binder include silicate binders such as water glass, etc., phosphate binders such as aluminum phosphate, etc., borate binders such as aluminum borate, etc., and hydraulic binders such as cement, etc. The organic and inorganic binders may be used in combination.

When the filler 1 is formed of an organic porous material, the artificial soil particle 10 may be produced by a technique similar to the above filler granulation technique using a binder. Alternatively, the artificial soil particle 10 may be produced as follows: the fillers 1 are heated to a temperature which is higher than or equal to the melting point of the organic porous material (a polymeric material, etc.) included in the filler 1 so that the surfaces of the fillers 1 are bonded together by thermal fusion and thereby formed into a grain. In this case, a grain which the fillers 1 are clustered together can be obtained without using a binder. Examples of such an organic porous material include an organic polymeric foam material which is a foam of an organic polymeric material, such as polyethylene, polypropylene, polyurethane, polyvinyl alcohol, cellulose, etc., and an organic polymer porous product having an open-cell foam structure which is produced by heating and melting powder of the organic polymeric material.

The artificial soil particle 10 may be produced by utilizing the gelling reaction of a polymeric gelling agent. Examples of the gelling reaction of a polymeric gelling agent include a gelling reaction between an alginate, propylene glycol alginate ester, gellan gum, glucomannan, pectin, or carboxymethyl cellulose (CMC), and a multivalent metal ion, and a gelling reaction caused by a double helix structure forming reaction of a polysaccharide, such as carrageenan, agar, xanthan gum, locust bean gum, tara gum, etc. Of them, a gelling reaction between an alginate and a multivalent metal ion will be described. Sodium alginate, which is an alginate, is a neutral salt formed by the carboxyl group of alginic acid bonding with a Na ion. While alginic acid is insoluble in water, sodium alginate is water-soluble. When an aqueous solution of sodium alginate is added to an aqueous solution containing a multivalent metal ion (e.g., a Ca ion), sodium alginate molecules are ionically cross-linked together to form a gel. In this embodiment, the gelling reaction may be performed by the following steps. Initially, an alginate is dissolved in water to formulate an aqueous solution of the alginate, and the fillers 1 are added to the aqueous alginate solution, followed by thorough stirring, to form a mixture solution which is the aqueous alginate solution in which the fillers 1 are dispersed. Next, the mixture solution is dropped into an aqueous solution of a multivalent metal ion, thereby gelling the alginate contained in the mixture solution into grains. Thereafter, the gelled particles are collected, followed by washing with water and then thorough drying. As a result, the artificial soil particle 10 is obtained which is a grain formed of an alginate gel including an alginate and a multivalent metal ion, in which the fillers 1 are dispersed.

Examples of an alginate which can be used in the gelling reaction include sodium alginate, potassium alginate, and ammonium alginate. These alginates may be used in combination. The concentration of the aqueous alginate solution is 0.1 to 5% by weight, preferably 0.2 to 5% by weight, and more preferably 0.2 to 3% by weight. When the concentration of the aqueous alginate solution is less than 0.1% by weight, the gelling reaction is less likely to occur. When the concentration of the aqueous alginate solution exceeds 5% by weight, the viscosity of the aqueous alginate solution is excessively high, and therefore, it is difficult to stir the mixture solution containing the filler 1 added, and drop the mixture solution to the aqueous multivalent metal ion solution.

The aqueous multivalent metal ion solution to which the aqueous alginate solution is dropped may be any aqueous solution of a divalent or higher-valent metal ion that reacts with the alginate to form a gel. Examples of such an aqueous multivalent metal ion solution include an aqueous solution of a multivalent metal chloride such as calcium chloride, barium chloride, strontium chloride, nickel chloride, aluminum chloride, iron chloride, cobalt chloride, etc., an aqueous solution of a multivalent metal nitrate such as calcium nitrate, barium nitrate, aluminum nitrate, iron nitrate, copper nitrate, cobalt nitrate, etc., an aqueous solution of a multivalent metal lactate such as calcium lactate, barium lactate, aluminum lactate, zinc lactate, etc., and an aqueous solution of a multivalent metal sulfate such as aluminum sulfate, zinc sulfate, cobalt sulfate, etc. These aqueous multivalent metal ion solutions may be used in combination. The concentration of the aqueous multivalent metal ion solution is 1 to 20% by weight, preferably 2 to 15% by weight, and more preferably 3 to 10% by weight. When the concentration of the aqueous multivalent metal ion solution is less than 1% by weight, the gelling reaction is less likely to occur. When the concentration of the aqueous multivalent metal ion solution exceeds 20% by weight, it takes a long time to dissolve the metal salt, and an excessive amount of the material is required, which is not cost-effective.

<Porous Structure of Artificial Soil Particle>

The grain obtained by each technique illustrated above is the artificial soil particle 10 of the present invention in which a plurality of the fillers 1 having the small hole 2 ranging from the subnanometer to the submicrometer scale are clustered together. The particle size of the artificial soil particle 10 (the average value of the size z of the artificial soil particle 10 in FIG. 1) is 0.2 to 10 mm, preferably 0.5 to 5 mm, and more preferably 1 to 5 mm. The particle size of the artificial soil particle 10 can, for example, be adjusted by classification using a sieve. The communication hole 3 is formed between the fillers 1 included in the artificial soil particle 10. When the particle size of the artificial soil particle 10 is less than 0.2 mm, the interstice between each artificial soil particle 10 is small, so that the drainage performance decreases, and therefore, it is likely to be difficult for a plant to be grown to absorb oxygen through its roots. On the other hand, when the particle size of the artificial soil particle 10 exceeds 10 mm, the interstice between each artificial soil particle 10 is large, and therefore, the drainage performance is excessively high, so that it is difficult for a plant to absorb water, or a plant is likely to fall down because the artificial soil particles 10 are sparse. The size of the communication hole 3 (the average value of the distance y between adjacent fillers 1 of FIG. 1) ranges from the submicrometer to the submillimeter scale, although it may vary depending on the type, composition, and granulation condition of the filler 1 or the binder. The size of the communication hole 3 may, for example, be set to about 0.1 to 500 $\mu$m. When the filler 1 is the zeolite 1a of FIG. 1(a) or the hydrotalcite 1b of FIG. 1(b), and a polymeric gelling agent is used, the size of the communication hole 3 is 0.1 to 20 $\mu$m. The size of the communication hole 3 may be measured using an optimum technique which is selected from gas adsorption, mercury intrusion, small-angle X-ray scattering, image processing, etc., and a combination thereof, depending on the state of an object to be measured. The particle size of the artificial soil particle 10 may, for example, be measured by optical microscopic observation and image processing. In this embodiment, the size of the communication hole 3 and the particle size of the artificial soil particle 10 are determined by the following measurement technique. Initially, the artificial soil particle to be measured is observed along with a ruler using a microscope. The microscopic image is obtained using an image processing software system (a two-dimensional image analysis software system "WinROOF" produced by MITANI CORPORATION). One hundred artificial soil particles are selected from the image, and the outlines of the communication holes or the artificial soil particles are traced. Based on the perimeter of the traced shape, the diameter of a circle corresponding to the perimeter of the traced shape is calculated. The average of the diameters of such circles (number: 100) obtained from the respective communication holes or artificial soil particles is referred to as the average size (unit: pixel). Thereafter, the average size is converted into a unit length ($\mu$m to mm scale) by comparing it with the ruler in the image, thereby calculating the size of the communication hole or the particle size of the artificial soil particle.

The artificial soil particle 10 of the present invention has a characteristic feature that, within a single particle, the small hole 2 of the filler 1 and the communication hole 3 formed between the fillers 1 have a particular relationship. Specifically, in the artificial soil particle 10, the small holes 2 are distributed and arranged around the communication hole 3 so that the communication hole 3 can take in water and nutrients from the outside and the small holes 2 can receive the nutrients from the communication hole 3.

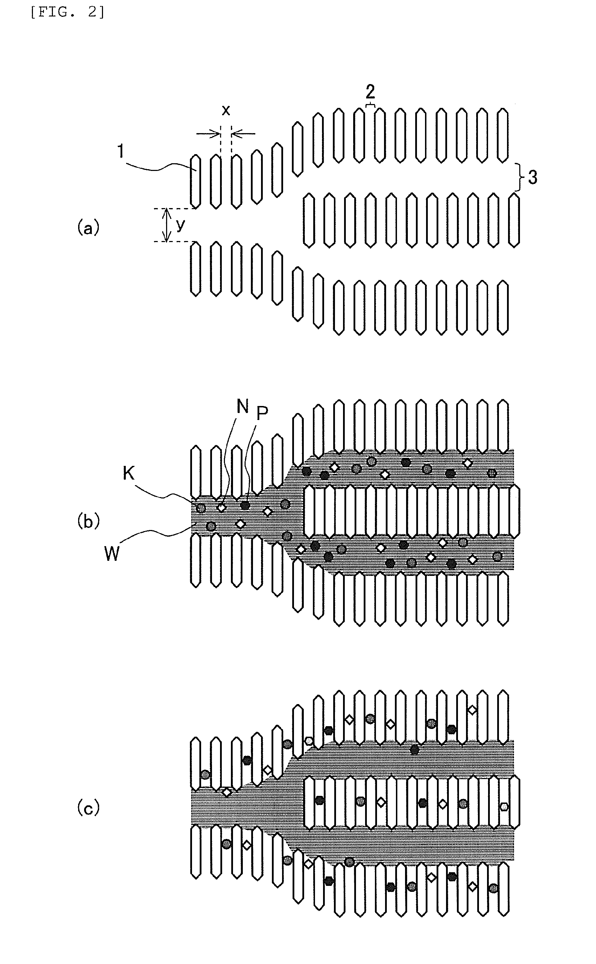

FIG. 2 is a model diagram schematically showing a positional relationship between the small holes 2 and the communication hole 3 in the artificial soil particle 10 of the present invention. Note that FIG. 2 shows a model of the internal structure of the artificial soil particle 10 of FIG. 1, which may not be exactly the same as the actual internal structure of the artificial soil particle 10. In the artificial soil particle 10 of the present invention, the distributed arrangement of the small holes 2 around the communication hole 3 means that the small holes 2 are connected to the communication hole 3, and the small holes 2 connected to the communication hole 3 are distributed substantially all around the communication hole 3. For example, as shown in FIG. 2(a), a large number of the small holes 2 having the size x are connected to the communication hole 3 having the size y, and the small holes 2 are distributed along all the length of the communication hole 3. Such a particular positional relationship between the small holes 2 and the communication hole 3 is a significant feature of the present invention. This particular positional relationship may be established for about half or more of the small holes 2 and about half or more of the communication holes 3. Although, in FIG. 2(a), because of space limitations, the particular positional relationship between the small holes 2 and the communication hole 3 is shown in a two-dimensional representation, the particular positional relationship is established in a three-dimensional space in the actual artificial soil particle 10. To date, conditions for establishing the particular positional relationship between the small holes 2 and the communication hole 3 have not yet been fully clarified. However, for example, it is considered that the particular positional relationship may be more reliably obtained by adopting a material having high crystallinity as the filler 1, adopting a material having a particular crystal structure as the filler 1, employing a particular combination of materials as the filler 1, controlling the crystal structure or layered structure of the filler 1, performing a process of aligning the fillers 1, adding a particular additive during the granulation of the fillers 1, or optimizing the technique of granulating the fillers 1 (conditions for the granulation).

<Mechanisms for Water Retentivity and Fertilizer Retentivity of Artificial Soil Particle>

The artificial soil particle 10 of the present invention has the particular positional relationship between the small holes 2 and the communication hole 3, and therefore, can be used to provide a high-quality and functional artificial soil which has well-balanced basic soil functions (water retentivity and fertilizer retentivity). Here, mechanisms for the water retentivity and fertilizer retentivity of the artificial soil particle 10 will be described in detail with reference to FIGS. 2(a) to 2(c). FIGS. 2(a) to 2(c) show how water W and nutrients K, N, and P are taken into the artificial soil particle 10 from the outside, in a stepwise manner. Here, the nutrient K represents potassium, the nutrient N represents nitrogen, and the nutrient P represents phosphorus.

As shown in FIG. 2(a), when the water W and the nutrients K, N, and P have not yet been taken into the artificial soil particle 10 from the outside, the communication hole 3 and the small holes 2 connected to the communication hole 3, of the artificial soil particle 10, are empty. As shown in FIG. 2(b), when the artificial soil particle 10 is in contact with the water W containing the nutrients K, N, and P, the water W and the nutrients K, N, and P are first taken into the communication hole 3. As shown in FIG. 2(c), when the communication hole 3 has been sufficiently wet, the nutrients K, N, and P of the water W and the nutrients K, N, and P taken into the communication hole 3 move from the communication hole 3 to the small holes 2. In the artificial soil particle 10 of the present invention, the nutrients K, N, and P are mainly taken into the small holes 2 while the water W is held by the communication hole 3. As a result, the small hole 2 mainly provides fertilizer retentivity while the communication hole 3 mainly provides water retentivity. Thus, the small hole 2 and the communication hole 3 are assigned different functions, and therefore, the artificial soil particle 10 is a functional particle having water retentivity and fertilizer retentivity which are well balanced. When the artificial soil particle 10 is used in an artificial soil, the water W and the nutrients K, N, and P can be suitably supplied to a plant to be grown, and therefore, the artificial soil is easy to maintain and handle.

<Physical Properties of Artificial Soil Particle>

The small holes 2 and the communication holes 3 of the artificial soil particle 10 are preferably configured so that the total volume of the communication holes 3 is greater than the total volume of the small holes 2. This is because such a configuration allows the communication hole 3 to have sufficient water retentivity and also allows for smooth movement of nutrients from the communication hole 3 to the small holes 2. Also, if the total volume of the communication holes 3 is greater than the total volume of the small holes 2, the artificial soil particle 10 has light weight and low bulk density, and therefore, provides an easy-to-handle artificial soil. In order to cause the total volume of the communication holes 3 to be greater than the total volume of the small holes 2, the fillers 1 are joined together into a three-dimensional network. This may, for example, be achieved by using a porous binder, drying by freeze-drying, etc., or joining the fillers 1 together while introducing air into the mixture of the fillers 1 and the binder, during the granulation of the fillers 1. In this case, a plurality of the fillers 1 are three-dimensionally joined together while a large number of voids are formed, so that a filler cluster having a three-dimensional network structure (the artificial soil particle 10) is formed. The three-dimensional network filler cluster has low bulk density and light weight, but has stable structure, and therefore, can be preferably used as the artificial soil particle 10 which has sufficient strength to grow root vegetables. The filler cluster also contains a large number of voids, and therefore, has good basic soil functions, such as water retentivity, fertilizer retentivity, drainage performance, air permeability, etc. Thus, the filler cluster can provide an artificial soil having a high added value.

The strength of the artificial soil particle 10 may be evaluated using a volume change rate which is measured when repeated compression loads are applied. The artificial soil particle 10 of the present invention is designed so that the volume change rate after repeated compression loads of 25 KPa are applied is 20% or less. The volume change rate is preferably 15% or less. When the volume change rate exceeds 20%, the artificial soil particle 10 is easily destroyed when the artificial soil is put into a planter, etc., or a plant is transplanted, so that the structure of the artificial soil particle 10 (in the structure, the small holes 2 of the fillers 1 are distributed and arranged around the communication hole 3 between the fillers 1, and the fillers 1 are joined together into a three-dimensional network) is likely to be destroyed. As a result, the balance between water retentivity and fertilizer retentivity is lost. Also, when the structure of the artificial soil particle 10 is destroyed, the artificial soil is likely to be compacted and solidified, which may have an adverse influence on growing of root vegetables.

While the artificial soil particle 10 of the present invention is suitable for growing of root vegetables, the water retentivity, which is good for artificial soil, allows for growing of leaf vegetables which have so far been mostly hydroponically grown. Here, the water retentivity of artificial soil may be evaluated based on the amount of water retained during passage of water. The amount of water retained during passage of water is calculated as the amount of water retained per 100 mL of the artificial soil particles, which is given in units of percent (%). In the artificial soil particle 10 of the present invention, the small holes 2 of the fillers 1 are distributed and arranged around the communication hole 3 between the fillers 1, and the fillers 1 are joined together into a three-dimensional network, i.e., a particular configuration, whereby the amount of water retained during passage of water can be set to 20 to 70%. When the amount of water retained during passage of water is less than 20%, it is difficult to retain sufficient water for growing a plant. When the amount of water retained during passage of water exceeds 70%, the air permeability of artificial soil deteriorates, likely leading to an adverse influence on the growth of a plant. Air permeability can be represented by the gas phase rate of artificial soil in a dry state. The gas phase rate of an artificial soil employing the artificial soil particle 10 of the present invention can be set to 20 to 80%, preferably 30 to 80%, and more preferably 30 to 70%. When the gas phase rate is less than 20%, the amount of air supplied to the roots of a plant is likely to be insufficient. When the gas phase rate exceeds 80%, the water retentivity is likely to be insufficient.

The artificial soil particle 10 may be designed so that the water retentivity of the communication hole 3 is increased. An example technique of improving the water retentivity of the communication hole 3 is to introduce a water retention material into the communication hole 3 of the artificial soil particle 10. The water retention material may, for example, be introduced into the communication hole 3 by filling the communication hole 3 with the water retention material or coating a surface of the communication hole 3 with the water retention material. In this case, the water retention material may be provided to at least a portion of the communication hole 3. The water retention material may, for example, be introduced by adding a polymeric material having water retentivity before granulation, or impregnating the artificial soil particle 10 with a polymer solution which is formulated by dissolving a polymeric material having water retentivity in a solvent.

Examples of a polymeric material which can be used as the water retention material include synthetic polymer water retention materials, such as polyacrylate polymers, polysulfonate polymers, polyacrylamide polymers, polyvinyl alcohol polymers, polyalkylene oxide polymers, etc., and natural polymer water retention materials, such as polyaspartate polymers, polyglutamate polymers, polyalginate polymers, cellulose polymers, starch, etc. These water retention materials may be used in combination.

As the solvent for dissolving the polymeric material which is used as the water retention material, selected is one which can well dissolve the polymeric material which is used. In other words, suitably selected is a combination of a polymeric material and a solvent which have their solubility parameter values (SP values) close to each other. For example, a combination of a polymeric material and a solvent whose SP values have a difference of 5 or less (e.g., a combination of nitro cellulose, having an SP value of about 10, and methanol, having an SP value of about 14.5) is selected. Examples of such a solvent include methanol, ethanol, isopropanol, butanol, ethyl acetate, acetone, methyl ethyl ketone, and methyl isobutyl ketone. These solvents may be used in combination.

Another technique of improving the water retentivity of the communication hole 3 is to use a water retention filler as all or a portion of the filler 1 which is a material used in formulation of the artificial soil particle 10. In this case, the generated artificial soil particle 10 itself has water retentivity, and therefore, a particular post-treatment for improving water retentivity is not required. As the water retention filler, a hydrophilic filler or a porous grain may be employed. Examples of the hydrophilic filler include zeolite, smectite minerals, mica minerals, talc, silica, double hydroxides, etc. Examples of the porous grain include foam glass, porous metals, porous ceramics, polymer porous materials, hydrophilic fibers, etc.

<Artificial Soil Aggregate>

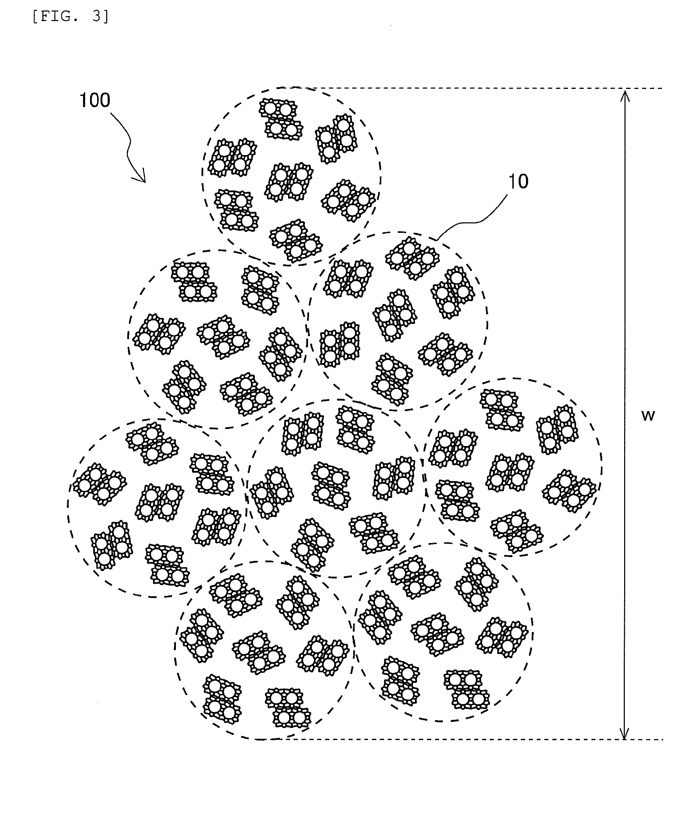

The artificial soil particles 10 of the present invention may be aggregated into an artificial soil aggregate which can be used as an artificial soil. FIG. 3 is a diagram for describing an artificial soil aggregate 100 according to the present invention. Here, the artificial soil aggregate 100 illustrated is an aggregate of the artificial soil particles 10 employing the zeolite 1a of FIG. 1(a).

The artificial soil aggregate 100 has a cluster structure in which a plurality of the artificial soil particles 10 are linked together. The cluster structure is obtained by bonding the artificial soil particles 10 together using a second binder. The second binder used in the aggregation may be the same as the binder (first binder) which is used in the formation of the artificial soil particle 10, or may be a different binder. The size of the artificial soil aggregate 100 (the average value of a size w of the artificial soil aggregate 100 of FIG. 3) is 0.4 to 20 mm, preferably 0.5 to 18 mm, and more preferably 1 to 15 mm. When the size of the artificial soil aggregate 100 is less than 0.4 mm, an interstice between each artificial soil particle 10 included in the artificial soil aggregate 100 is small, so that the drainage performance decreases, and therefore, it is likely to be difficult for a plant to be grown to absorb oxygen through its roots. On the other hand, when the size of the artificial soil aggregate 100 exceeds 20 mm, the drainage performance is excessively high, so that it is difficult for a plant to absorb water, or a plant is likely to fall down because the artificial soil aggregate 100 is sparse. The size of the artificial soil aggregate 100 is, for example, measured by optical microscopic observation and image processing. In this embodiment, as with the size of the communication hole 3 and the particle size of the artificial soil particle 10, the size of the artificial soil aggregate 100 was measured by the above measurement technique using image processing.

The artificial soil aggregate 100 which is obtained by aggregating the artificial soil particles 10 of the present invention has water retentivity and fertilizer retentivity which are well balanced, and therefore, can suitably supply water and nutrients to a plant to be grown. Therefore, the artificial soil aggregate 100 of the present invention is useful as an artificial soil which is easy to maintain and handle.

<Artificial Soil Molded Product>

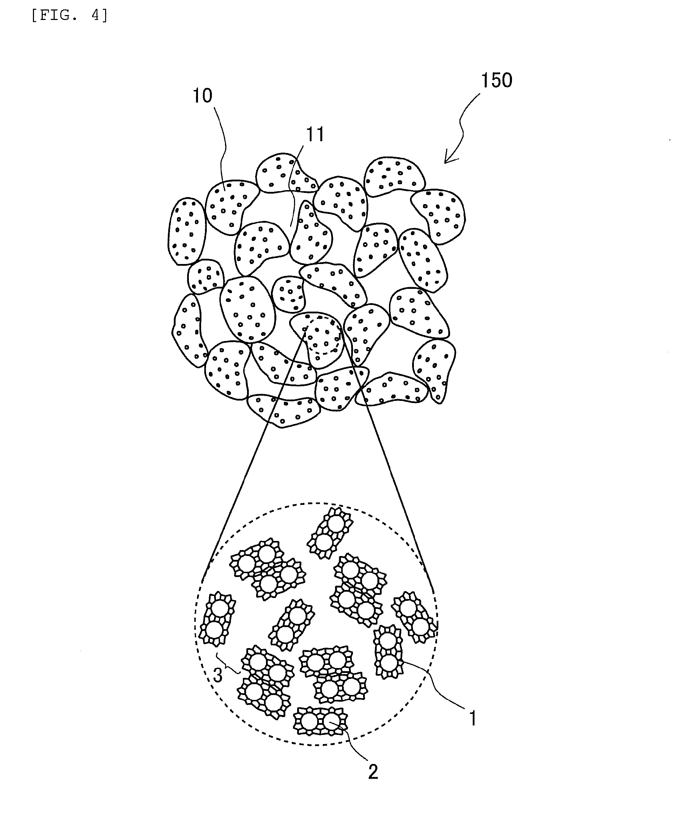

The artificial soil particles 10 of the present invention may be molded into any form and used as an artificial soil molded product. FIG. 4 is a diagram for describing an artificial soil molded product 150 according to the present invention. A dotted line circle shown in FIG. 4 is a partially enlarged view of the artificial soil particle 10 included in the artificial soil molded product 150, showing a cross-section of the artificial soil particle 10. The artificial soil molded product 150 is obtained by molding a plurality of the artificial soil particles 10 into a predetermined shape. The artificial soil molded product 150 may be formed into various shapes, such as a sheet, block, plate, band, sphere, bar, indefinite shape, etc., depending on the application. The artificial soil molded product 150 has a predetermined interstice 11 between each adjacent artificial soil particle 10. The interstices 11 allow air and water to pass therethrough, and therefore, can drain excess water while holding water needed for a plant. When the artificial soil molded product 150 is wet, excess water is drained through the interstices 11. When the artificial soil molded product 150 is dry, the artificial soil molded product 150 can draw up surrounding water due to the capillary action of the interstices 11. Thus, the artificial soil molded product 150 has good air permeability and drainage performance due to the interstice 11 formed between each adjacent artificial soil particle 10. The interstices 11 also provide a space for allowing a plant root to grow, so that a plant is easily rooted, and in addition, the growth of a plant is promoted.

The artificial soil molded product 150 may, for example, be produced as follows: a second binder is added to the artificial soil particles 10, followed by kneading, and the mixture is molded into a predetermined shape, followed by drying. The second binder may be the same as the binder (first binder) which is used in the formation of the artificial soil particle 10, or may be a different binder. The amount of the second binder added may, for example, be 1 to 30% by weight. When the amount of the second binder added is less than 1% by weight, the bonding strength between each artificial soil particle 10 is likely to be insufficient. When the amount of the second binder added exceeds 30% by weight, the interstice 11 between each artificial soil particle 10 is small, and therefore, the drainage performance of the artificial soil molded product 150 is likely to decrease. In the molding process, flexible grains (e.g., fragments of polyurethane foam, etc.) may be added to the second binder. In this case, the interstice between each artificial soil particle 10 included in the artificial soil molded product 150 can be expanded as a plant root grows, without hindering or preventing the growth of the plant root. Note that the artificial soil molded product 150 can be produced without using the second binder. For example, a mold having a predetermined shape is filled with the artificial soil particles 10, and then pressure is applied to the artificial soil particles 10, so that the artificial soil particles 10 are joined firmly together, whereby the artificial soil molded product 150 is obtained. If heating is performed at appropriate temperature when pressure is applied, the surface of the artificial soil particle 10 exhibits stickiness, and therefore, the bonding strength between each artificial soil particle 10 can be improved.

<Greening Sheet>

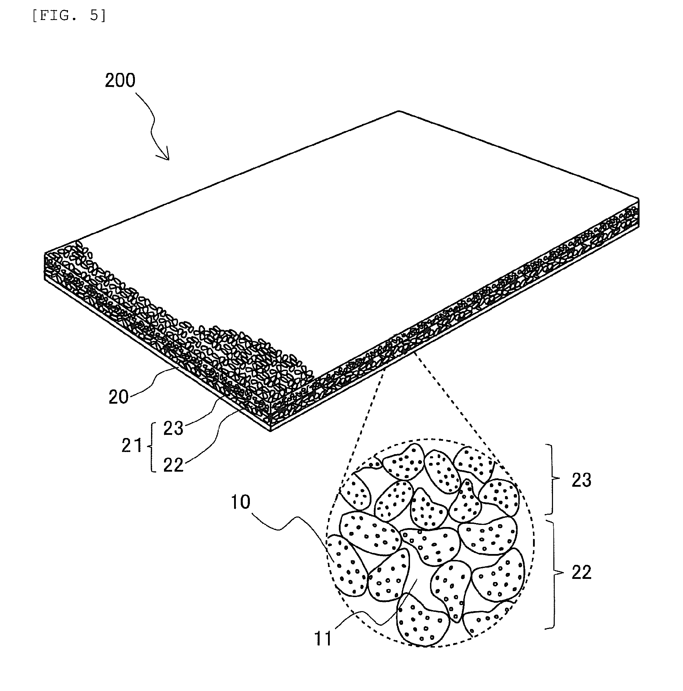

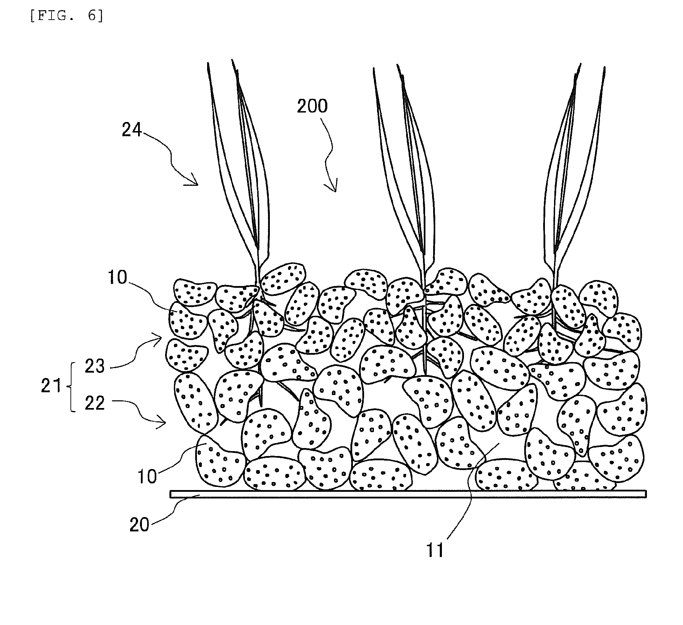

FIG. 5 is a diagram for describing a greening sheet 200 according to the present invention. FIG. 6 is a partially cross-sectional view showing a situation that plants 24 are planted in the greening sheet 200 of FIG. 5. The greening sheet 200 is produced by laying the artificial soil molded product 150 in the form of a sheet. In this embodiment, as shown in FIG. 5, the greening sheet 200 includes a water permeable sheet 20 which supports the artificial soil particles 10 while allowing water to pass therethrough as necessary during watering, and a growing base layer 21 which includes a pile of the artificial soil particles 10 on the water permeable sheet 20. As shown in FIG. 5, the growing base layer 21 includes two layers. The lower layer of the growing base layer 21 is a drainage layer 22 which includes a pile of the artificial soil particles 10 having a large particle size. The upper layer of the growing base layer 21 is a water retention layer 23 which includes a pile of the artificial soil particle 10 having a small particle size. The growing base layer 21 is produced by the same technique that is used to produce the artificial soil molded product 150. The water permeable sheet 20 is formed of a material which allows water drained from the growing base layer 21 to pass therethrough. Such a material is, for example, a nonwoven fabric of synthetic fibers, such as polyethylene, polypropylene, etc.

The plant 24 uses water retained by the water retention layer 23 (the upper layer). The water retention layer 23 holds water in the communication holes 3 of the artificial soil particle 10, and in addition, in the interstices 11 between the artificial soil particles 10 which are dense, and therefore, sufficient water can be supplied to the plants 24. The drainage layer 22 (the lower layer) can drain excess water contained in the interstices 11 while holding water needed for the plants 24 in the artificial soil particles 10, and therefore, sufficient air permeability is ensured for the roots of the plants 24, whereby the root rot of the plants 24 can be reduced or prevented. Also, in the drainage layer 22, the artificial soil particles 10 are sparsely piled, so that the plants 24 are easily rooted, and therefore, the plants 24 are hindered or prevented from falling down, etc.

The artificial soil particle 10 used in the greening sheet 200 has light weight and stable structure, and therefore, it is easy to adjust the thickness of the greening sheet 200, and it is also easy to handle the greening sheet 200. Therefore, the greening sheet 200 exhibits good workability during installation of it on a floor and wall of a building. By suitably adjusting the thickness of the greening sheet 200, a wide variety of plants 24 can be grown. If the greening sheet 200 includes the artificial soil particle 10 additionally including a water retention material, the thickness of the sheet can be adjusted within a larger range. When the greening sheet 200 is used on a roof or balcony floor of a building, house, etc., the optimum thickness of the greening sheet 200 varies depending on the plant type, i.e., the root depth. For example, the thickness of the greening sheet 200 is preferably 10 to 200 mm, and more preferably 30 to 100 mm, for lawn grass or short grasses.

Although, in this embodiment, the growing base layer 21 including two layers is illustrated, the structure of the growing base layer 21 may be changed as necessary, depending on the place or way in which the greening sheet 200 is used. For example, the growing base layer 21 may include three or more layers having different densities of the artificial soil particles 10. Alternatively, the growing base layer 21 may be formed to have a continuous density gradient in the thickness direction from an upper layer to a lower layer. Still alternatively, the growing base layer 21 may be formed to have a uniform density in the thickness direction.

<Wall Greening Panel>

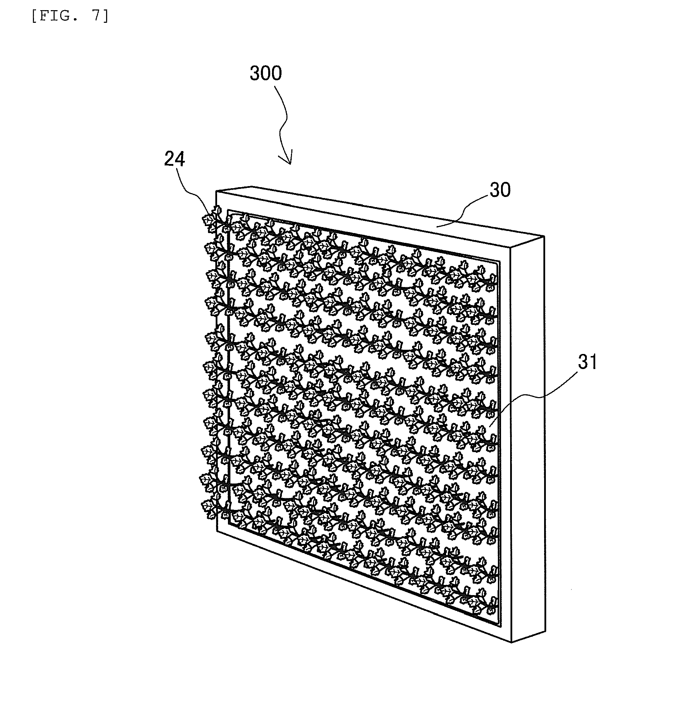

FIG. 7 is a diagram for describing a wall greening panel 300 according to the present invention. The wall greening panel 300 includes the artificial soil molded product 150 and a framework 30 which holds the artificial soil molded product 150. In this embodiment, as shown in FIG. 7, the artificial soil molded product 150 is provided in a concave portion 31 formed inside the framework 30. The concave portion 31 has, for example, a plurality of hooks (not shown) for holding the artificial soil molded product 150 so that the artificial soil molded product 150 does not drop from the framework 30 when the artificial soil molded product 150 hangs on the hooks. Plants 24 are planted throughout the artificial soil molded product 150. When the plants 24 have grown, the front surface of the wall greening panel 300 is substantially covered with the plants 24, whereby a greening effect is provided. The framework 30 included in the wall greening panel 300 is preferably formed of a lightweight material which has water resistance and corrosion resistance in order to be durable against outdoor conditions. Examples of the material for the framework 30 include synthetic resin materials such as polyethylene resin, polystyrene resin, PET resin, ABS resin, etc., lightweight metal materials such as aluminum alloy, magnesium alloy, etc., woods such as Japanese cedar, cypress, bamboo, etc., etc.

As shown in FIG. 7, the framework 30 used in the wall greening panel 300 of this embodiment is formed in the shape of a rectangle as viewed from the front. The shape or structure of the framework 30 may be changed as necessary, depending on conditions of a place where a green wall is installed. Because the artificial soil molded product 150 has stable structure, if the artificial soil molded product 150 has a fairly light weight, a reinforcement tape may be wrapped around the artificial soil molded product 150 instead of using the framework 30, etc., so that the framework 30 may be simplified or removed. According to the present invention, a green wall suitable for conditions of a place where the wall greening panel 300 is installed can be provided by combining the wall greening panels 300 having various forms.

Assuming that the wall greening panel 300 is attached to a vertical wall, when the wall greening panel 300 is watered, water held by the artificial soil molded product 150 moves downward due to the force of gravity, and therefore, a portion of the artificial soil molded product 150 which is located at a higher level in the vertical direction of the wall greening panel 300 may easily become dry, while a portion located at a lower level in the vertical direction may contain excessive water due to water which drops from a higher level. Therefore, in the wall greening panel 300, the artificial soil molded product 150 may be formed to have a density gradient so that the density of the artificial soil particles 10 is dense at a higher level in the vertical direction while the density of the artificial soil particles 10 is sparse at a lower level in the vertical direction. If the artificial soil molded product 150 thus configured is used to form the wall greening panel 300, the difference in the amount of retained water between a higher portion and a lower portion in the vertical direction of the wall greening panel 300 can be reduced, and therefore, plants can grow uniformly throughout the wall.

<Horticultural Block>

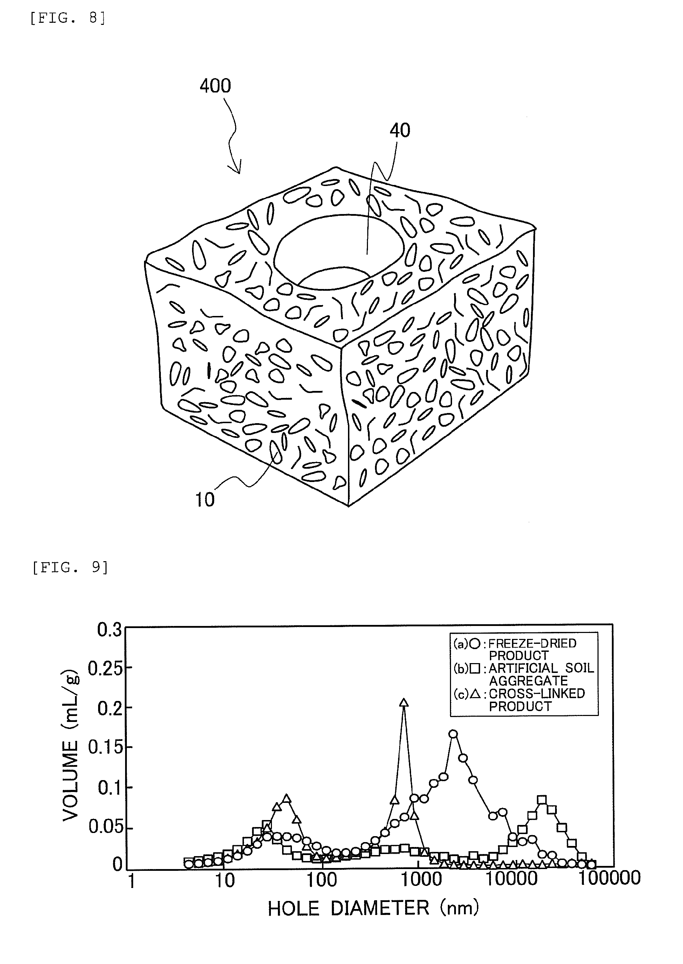

FIG. 8 is a diagram for describing a horticultural block 400 according to the present invention. The horticultural block 400 is the above artificial soil molded product 150 which is formed in the shape of a block. In this embodiment, as shown in FIG. 8, the artificial soil molded product 150 is formed in the shape of a container for growing a plant. The horticultural block 400 may be produced using the same technique that is used to produce the artificial soil molded product 150. A concave growing portion 40 for planting a plant is formed in the vicinity of the center of the upper portion of the horticultural block 400. As a result, the horticultural block 400 may be commercialized as a plant pot which is an integration of an artificial soil and a plant. In order to prevent watering water from leaking out from the horticultural block 400, a synthetic polymeric material or natural polymeric material which can function as a water retention material may be added when the artificial soil particles 10 are molded. In this case, the same water retention material that is used for the artificial soil particle 10 may be used, or alternatively, a different water retention material may be employed. The improved water leakage resistance allows the horticultural block 400 to be uneventfully used indoors.

The horticultural block 400 may have a double-layer structure including an outer portion and an inner portion. For example, a layer having high water retentivity to which a water retention material is added is formed in the outer portion, while another layer having high fertilizer retentivity to which a material having ion exchange capability is added is formed in the inner portion. In this case, while the water permeability and air permeability of the inner portion are maintained at a required level, watering water does not leak out from the horticultural block 400. In addition, when fertilizer is added to the growing portion 40 of the horticultural block 400, a plant can reliably absorb nutrients because the inner portion has fertilizer retentivity.

Examples

The artificial soil molded product, greening sheet, wall greening panel, and horticultural block of the present invention are formed based on the artificial soil particle and artificial soil aggregate of the present invention. Therefore, in examples below, the artificial soil particle and artificial soil aggregate of the present invention will be particularly described.

In Examples 1 to 3, the artificial soil particle of the present invention was formulated using different techniques of forming grains (granulation, pulverization, and gelling). In Example 4, the artificial soil particles of the present invention were aggregated to formulate the artificial soil aggregate of the present invention. Characteristics of the artificial soil particle and the artificial soil aggregate were evaluated using techniques described in (1) to (6) below.

(1) Particle Size

Artificial soil particles or artificial soil aggregates were previously classified according to predetermined particle sizes using sieves, and the particle sizes of the classified particles or aggregates were measured by the measurement technique using image processing described in the above embodiment. The classified particles or aggregates were used as samples.

(2) Hole Diameter

The hole diameter of the small hole of the filler included in the artificial soil particle was measured using the gas adsorption technique. The hole diameter (hole diameter distribution) of the communication hole between the fillers was measured using the mercury intrusion technique. The hole diameter distribution will be described in detail below in the section "Hole Diameter Distribution of Artificial Soil Particle."

(3) Cation Exchange Capacity

An extraction liquid of the artificial soil particle was prepared using the general extraction and filter unit "CEC-10 Ver. 2" manufactured by FUJIHIRA INDUSTRY CO., LTD., and was used as a sample for measurement of cation exchange capacity. The cation exchange capacity (CEC) of the artificial soil particle was measured using the soil plant general analyzer "SFP-3" manufactured by FUJIHIRA INDUSTRY CO., LTD.

(4) Anion Exchange Capacity

Twenty milliliter of 0.05 M calcium nitrate solution was added to 2 g of the artificial soil particles, followed by stirring for 1 h. The solution was centrifuged (10,000 rpm) for 1 min at room temperature, and the supernatant was used as a measurement sample. For the measurement sample, the absorbance at a wavelength of 410 nm was measured using an ultraviolet and visible spectrophotometer, to obtain the calcium nitrate concentration. The amount of nitrate nitrogen absorbed per unit weight was calculated based on the difference between the obtained calcium nitrate concentration and the calcium nitrate concentration of a blank, and was converted into an anion exchange capacity (AEC) per unit volume using the specific gravity.

(5) Strength

The strength of the artificial soil particle was evaluated based on the volume change rate which was obtained when repeated compression loads were applied. The volume change rate was measured by the following technique. One hundred milliliter of the artificial soil as a sample was loaded in a sample cylinder (inner diameter: about 5 cm, height: about 5 cm, and volume: 100 mL) for evaluation of the soil, and a cylindrical weight (weight: 5 kg) having a diameter slightly smaller than that of the sample cylinder was gently placed on the sample. The sample was allowed to stand for 60 sec before the weight was removed. These operations were repeated 10 times (repeated compression loads: 25 KPa). After the application of the repeated compression loads were completed, the sample was allowed to stand for 60 sec. The volume V of the sample was measured using a graduated cylinder, etc., and the volume change rate $\Delta V$ was calculated by:

$$\Delta V \ (\%) \ = \ (100 \ - \ V)/100 \ \times \ 100 \qquad\qquad [1]$$

(6) Amount of Retained Water

One hundred milliliter of the artificial soil particles was packed into an empty chromatography column. The amount of water retained in the artificial soil as 200 mL of water was gently poured into the column from the top, is referred to as the "amount of water retained during passage of water."

(7) Gas Phase Rate

An artificial soil including the artificial soil particles was immersed in tap water for 24 h to prepare a water-saturated sample. The sample was allowed to stand for 1 h. After water which falls down due to its weight was allowed to flow out from the sample, the sample was extracted and placed into a 100-mL sample cylinder while the shape of the sample was maintained unchanged to the extent possible. The sample cylinder was set in a digital actual volumenometer "DIK-1150" manufactured by Daiki Rika Kogyo Co., Ltd., to measure the gas phase rate.

(Example 1) : Granulation

Zeolite was used as the filler and polyethylene emulsion was used as the binder. One hundred parts by weight of an artificial zeolite "Ryukyu-lite 600" manufactured by ECOWEL Inc. and five parts by weight of a polyethylene emulsion "SEPOLSION (registered trademark) G" manufactured by Sumitomo Seika Chemicals Company Limited were mixed while stirring for granulation. The mixture was dried for the first time at 80°C for 24 h. Next, the mixture was dried for the second time at 120°C for 24 h. The mixture was classified by sieving to obtain artificial soil particles having a size between 2 mm and 4 mm. In the artificial soil particle thus obtained, a plurality of fillers having a small hole ranging from the subnanometer to the submicrometer scale were clustered together, with a communication hole ranging from the submicrometer to the submillimeter scale being formed between the fillers. The small holes were distributed and arranged all around the communication hole. The artificial soil particle had a cation exchange capacity of 18 meq/100 cc. An artificial soil employing the artificial soil particles had a strength (volume change rate) of 15%, an amount of retained water (the amount of water retained during passage of water) of 28%, and a gas phase rate of 35%.

(Example 2): Pulverization

Hydrotalcite was used as the filler and polyethylene emulsion was used as the binder. One hundred parts by weight of a reagent hydrotalcite manufactured by Wako Pure Chemical Industries, Ltd., and five parts by weight of a polyethylene emulsion "SEPOLSION (registered trademark) G" manufactured by Sumitomo Seika Chemicals Company Limited were mixed while stirring. The mixture was introduced into a drying machine, and dried at 120°C for 24 h. As a result, a block-shaped product was obtained. The block-shaped product was pulverized using a mortar and a pestle, followed by classification by sieving, to obtain artificial soil particles having a size between 2 mm and 4 mm. In the artificial soil particle thus obtained, a plurality of fillers having a small hole ranging from the subnanometer to the submicrometer scale were clustered together, with a communication hole ranging from the submicrometer to the submillimeter scale being formed between the fillers. The small holes were distributed and arranged all around the communication hole. The artificial soil particle had an anion exchange capacity of 15 meq/100 cc. An artificial soil employing the artificial soil particles had a strength (volume change rate) of 12%, an amount of retained water (the amount of water retained during passage of water) of 25%, and a gas phase rate of 37%.

(Example 3): Gelling

Zeolite and hydrotalcite were used as the filler, sodium alginate was used as the alginate, and 5% aqueous calcium chloride solution was used as the aqueous multivalent metal ion solution. A reagent sodium alginate manufactured by Wako Pure Chemical Industries, Ltd., was dissolved in water to formulate an aqueous solution having a concentration of 0.5%. Ten parts by weight of an artificial zeolite "Ryukyu-lite 600" manufactured by ECOWEL Inc. and 10 parts by weight of a reagent hydrotalcite manufactured by Wako Pure Chemical Industries, Ltd., were added to 100 parts by weight of the 0.5% aqueous sodium alginate solution, followed by mixing. The mixture solution was dropped into 5% aqueous calcium chloride solution at a rate of one drop/sec. After the droplets were gelled to form particles, the gel particles were collected, and then washed with water, followed by drying using a drying machine at 55°C for 24 h. The dried gel particles were classified by sieving to obtain artificial soil particles having a size between 2 mm and 4 mm. In the artificial soil particle thus obtained, a plurality of fillers having a small hole ranging from the subnanometer to the submicrometer scale were clustered together, with a communication hole ranging from the submicrometer to the submillimeter scale being formed between the fillers. The small holes were distributed and arranged all around the communication hole. The artificial soil particle had a cation exchange capacity of 14 meq/100 cc and an anion exchange capacity of 15 meq/100 cc. An artificial soil employing the artificial soil particles had a strength (volume change rate) of 13%, an amount of retained water (the amount of water retained during passage of water) of 26%, and a gas phase rate of 33%.

(Example 4): Artificial Soil Aggregate

One hundred parts by weight of a product obtained by pulverizing the artificial soil particle of Example 3, and five parts by weight of a vinyl acetate resin adhesive "BONDO (registered trademark) for wood" manufactured by Konishi Co., Ltd., as the second binder, were mixed. The mixture was introduced into a granulation machine to form aggregates. As a result, artificial soil aggregates were obtained. The artificial soil aggregate thus obtained had a grain size of 3 to 18 mm, and a cluster structure in which a plurality of artificial soil particles are linked together.

(Hole Diameter Distribution of Artificial Soil Particle)

The distribution of hole diameters was measured by mercury intrusion in order to confirm that the artificial soil particle of the present invention has a porous structure. FIG. 9 is a graph showing the result of a measurement of the hole diameter distribution of the artificial soil particle or artificial soil aggregate of the present invention by mercury intrusion. The hole diameter distribution measurement was conducted for the following three artificial soil particles or artificial soil aggregates: (a) a freeze-dried artificial soil particle (the same artificial soil particle of Example 3, except that the drying technique was changed to freeze-drying); (b) an aggregate of artificial soil particles (each particle size: 0.1 to 0.25 $\mu$m) which were solidified using vinyl acetate resin, where the aggregate had a size of about 3$\phi$ (3 mm) (corresponding to the artificial soil aggregate of Example 4); and (c) an artificial soil particle which its components were cross-linked to a further extent using a cross-linking agent (a cross-linking agent manufactured by Nisshinbo Chemical Inc.: CARBODILITE (registered trademark) 0.7%) (an artificial soil particle formulated based on the artificial soil particle of the Example 3, whose cross-link density is increased). As can be seen from FIG. 9, for the artificial soil particle (a), two peaks were observed at about 30 nm and about 2 $\mu$m. It appears that the peak at about 30 nm is due to a minute interstice between each filler, and the peak at about 2 $\mu$m is due to the communication hole. For the artificial soil aggregate (b), three peaks were observed at about 50 nm, about 0.65 $\mu$m, and about 20 $\mu$m. It appears that the peak at about 50 nm is due to a minute interstice between each filler, and the peak at about 0.65 $\mu$m is due to the communication hole. It also appears that the peak at about 20 $\mu$m is due to an interstice between each particle due to the aggregation. This interstice can be considered to be a kind of communication hole. For the artificial soil particle (c), two peaks were observed at about 50 nm and about 0.65 $\mu$m. It appears that the peak at about 50 nm is due to a minute interstice between each filler, and the peak at about 0.65 $\mu$m is due to the communication hole. Thus, it was confirmed that the artificial soil particle or artificial soil aggregate of the present invention has a particular porous structure which has two size distributions, i.e., the communication holes ranging from the submicrometer to the submillimeter scale and the small holes of the fillers ranging from the subnanometer to the submicrometer scale.

INDUSTRIAL APPLICABILITY

The artificial soil particle and artificial soil aggregate of the present invention are applicable to artificial soils for use in a plant factory, etc., and other applications, such as indoor horticultural soils, greening soils, molded soils, soil conditioners, soils for interior decoration, etc. The artificial soil molded product, greening sheet, wall greening panel, and horticultural block of the present invention are applicable to greening and planting on roofs and balconies of buildings, houses, etc.

REFERENCE SIGNS LIST

| 1 | FILLER |
| 2 | SMALL HOLE |
| 3 | COMMUNICATION HOLE |
| 10 | ARTIFICIAL SOIL PARTICLE |
| 100 | ARTIFICIAL SOIL AGGREGATE |
| 150 | ARTIFICIAL SOIL MOLDED PRODUCT |
| 200 | GREENING SHEET |
| 300 | WALL GREENING PANEL |
| 400 | HORTICULTURAL BLOCK |

**Claims**

1.  An artificial soil particle **characterized in that**, in the particle, a plurality of fillers having a small hole ranging from the subnanometer to the submicrometer scale are clustered together,
    a communication hole ranging from the submicrometer to the submillimeter scale is formed between the fillers, and the small holes are distributed and arranged around the communication hole so that the communication hole is allowed to take in water and nutrients from the outside and the small holes are allowed to receive the nutrients from the communication hole.

2.  The artificial soil particle of claim 1,
    **characterized in that**
    the fillers are joined together into a three-dimensional network so that the total volume of the communication holes is greater than the total volume of the small holes.

3.  The artificial soil particle of claim 1 or 2,
    **characterized in that**
    a water retention material is introduced into at least a portion of the communication hole, and ion exchange capability is imparted to the small hole.

4. The artificial soil particle of any one of claims 1 to 3, **characterized in that**
   the small hole has a hole diameter of 0.2 to 800 nm, and the communication hole has a hole diameter of 0.1 to 500 $\mu$m.

5. The artificial soil particle of any one of claims 1 to 4, **characterized in that**
   the artificial soil particle has a particle size of 0.2 to 10 mm.

6. An artificial soil aggregate **characterized in that** it is an aggregate of the artificial soil particles of any one of claims 1 to 5.

7. An artificial soil molded product **characterized in that** it is obtained by molding the artificial soil particles of any one of claims 1 to 5.

8. A greening sheet **characterized in that** it is obtained by laying the artificial soil molded product of claim 7 in the form of a sheet.

9. A wall greening panel **characterized in that** it includes the artificial soil molded product of claim 7 and a framework which holds the artificial soil molded product of claim 7.

10. A horticultural block **characterized in that** it is the artificial soil molded product of claim 7 in the form of a block.

[FIG. 1]

[FIG. 2]

[FIG. 3]

[FIG. 4]

[FIG. 5]

[FIG. 6]

[FIG. 7]

[FIG. 8]

[FIG. 9]

<table>
<tr><td colspan="2" align="center">**INTERNATIONAL SEARCH REPORT**</td><td>International application No.<br>PCT/JP2013/075565</td></tr>
</table>

**A. CLASSIFICATION OF SUBJECT MATTER**
*A01G1/00*(2006.01)i, *B01J39/08*(2006.01)i, *B01J41/08*(2006.01)i, *C01B39/02*(2006.01)i, *C01F7/00*(2006.01)i

According to International Patent Classification (IPC) or to both national classification and IPC

**B. FIELDS SEARCHED**

Minimum documentation searched (classification system followed by classification symbols)
A01G1/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-335747 A (Tetra Co., Ltd.),<br>26 November 2002 (26.11.2002),<br>paragraphs [0025] to [0036]; fig. 2, 3<br>(Family: none) | 1,2,4-10<br>3 |
| Y | JP 62-95138 A (Nitto Electric Industrial Co., Ltd.),<br>01 May 1987 (01.05.1987),<br>claims; page 3, lower left column, lines 10 to 17<br>(Family: none) | 3 |
| Y | JP 2002-80284 A (Aisin Takaoka Co., Ltd.),<br>19 March 2002 (19.03.2002),<br>paragraphs [0017] to [0024]<br>(Family: none) | 3 |

☒ Further documents are listed in the continuation of Box C.　☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>　16 December, 2013 (16.12.13) | Date of mailing of the international search report<br>　24 December, 2013 (24.12.13) |
| Name and mailing address of the ISA/<br>　Japanese Patent Office | Authorized officer |
| Facsimile No. | Telephone No. |

Form PCT/ISA/210 (second sheet) (July 2009)

# EP 2 901 849 A1

**INTERNATIONAL SEARCH REPORT**

International application No.

PCT/JP2013/075565

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-336356 A (Okutama Kogyo Co., Ltd.), 05 December 2000 (05.12.2000), (Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000336356 A
- JP 2011241262 A
- JP 2000144749 A